# EUROPEAN PATENT APPLICATION

(11) **EP 3 006 268 A1**
(43) Date of publication of application: **13.04.2016**
(21) Application number: 15173545.3
(22) Date of filing: 24.06.2015
(51) Int. Cl.: B60R 7/04

(54) **STORAGE UNIT FOR VEHICLE CONSOLE**

(30) Priority: 10.10.2014 KR 20140136816
(71) Applicant: Hanil E-Hwa Co., Ltd., Seoul 135-750 (KR)
(72) Inventor: Choi, Sung Gil, 336-799 Chungcheongnam-do (KR); Kim, Ki Ho, 336-050 Chungcheongnam-do (KR)
(74) Representative: Zinkler, Franz

(57) **Abstract**

Disclosed herein is a storage unit for a vehicle console, including a console body (10), and a basket (20) slidably provided on an outer surface of the console body and having a storage space portion (21) for accommodating a tip portion of the console body, the storage unit is provided on the outer surface of the console such that an internal space of the console is not occupied and a storage space may be secured.

## Description

### CROSS-REFERENCE TO RELATED APPLICATIONS

This application claims priority to Korean Patent Application No. 10-2014-0136816, filed on October 10, 2014, the disclosure of which is incorporated herein by reference in its entirety.

### BACKGROUND OF THE INVENTION

### Field of the Invention

Exemplary embodiments of the present invention relate to a storage unit for a vehicle console, and more particularly, to a storage unit for a vehicle console, which is slidably provided in a vehicle console to store articles.

### Description of the Related Art

In general, an armrest on which an occupant places his/her arm and a console having various storage spaces are provided in a space between a driver seat and an occupant seat in a vehicle.

Korean Patent Laid-open Publication No. 2000-0072086 (related document) discloses a drawer member drawn in a drawer manner to store articles, as the conventional storage unit for a console.

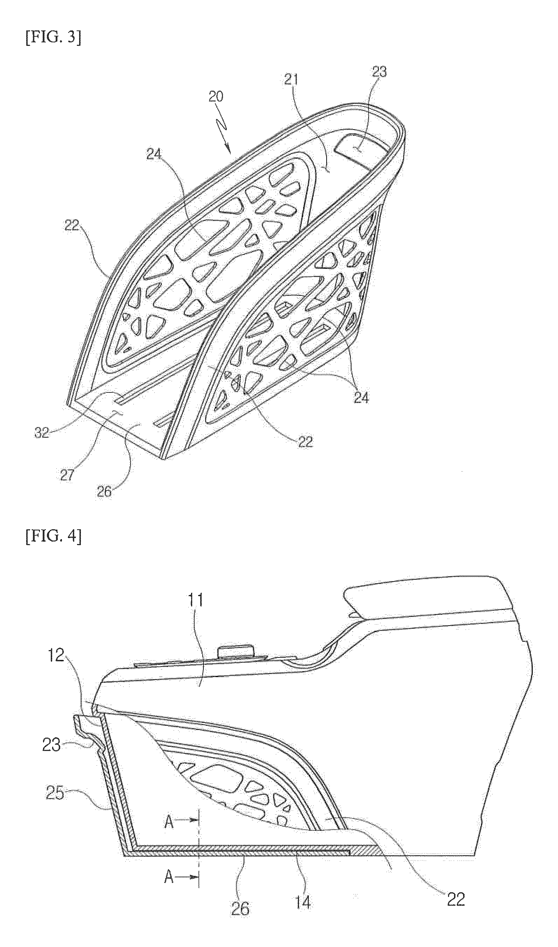

However, since the conventional drawer member for the console is drawn in a drawer manner in a state in which the drawer member is accommodated in the console, there is a problem in that an internal space of the console is occupied by the drawer member (see Fig. 3 in related document).

In addition, since only a front portion of the drawer member is exposed to the outside and a side portion thereof is located within the console in a state in which the drawer member is closed, the drawer member contributes little to exterior decoration of the console.

Meanwhile, since the drawer member is inserted in and drawn from a drawer accommodation space of the console, the drawer member has a width limited to the drawer accommodation space. For this reason, larger articles than the drawer member may not be stored therein even though the drawer member is made of a flexible material.

### [Related Art Document]

[Patent Document] Korean Patent Laid-open Publication No. 2000-0072086

### SUMMARY OF THE INVENTION

The present invention has been made in view of the above-mentioned problems, and an object thereof is to provide a storage unit for a vehicle console, which is provided on an outer surface of a console such that an internal space of the console is not occupied by the storage unit and a storage space may be secured.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with one aspect of the present invention, a storage unit for a vehicle console includes a console body, and a basket slidably provided on an outer surface of the console body and having a storage space portion for accommodating a tip portion of the console body.

In the storage unit, the basket may include a pair of side portions seated to side surfaces facing a driver seat and an occupant seat in the outer surface of the console body, and a front portion provided between the side portions and seated to a front surface of the console body.

In the storage unit, the console body may have a basket seating groove formed on the outer surface thereof, the side portions and front portion of the basket being seated to the basket seating groove.

In the storage unit, the basket may have a bottom portion formed by the side portions and a lower end of the front portion, and the console body may have a basket entry groove for accessibly accommodating the bottom portion of the basket.

In the storage unit, the basket may have a plurality of pattern holes formed on the side portions.

The storage unit may further include a guide rail and a guide portion, the guide rail slidably guiding the guide portion provided in the basket, the guide portion being provided in the basket to move along the guide rail.

In the storage unit, the guide rail may be formed on an inner wall of the basket entry groove of the console body, and the guide portion may be formed on the bottom portion of the basket.

In the storage unit, the guide rail may be formed on each of the side surfaces of the console body, and the guide portion may be formed on each of the side portions of the basket.

In the storage unit, the guide rail may be formed on an interior floor of the vehicle, and the guide portion may be formed on a back surface of the bottom of the basket.

In the storage unit, the basket may be made of a flexible material having elasticity.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:
Figs. 1 and 2 are perspective views illustrating a storage unit for a vehicle console according to an embodiment of the present invention;
Fig. 3 is a perspective view illustrating a basket in Figs. 1 and 2;
Fig. 4 is a partial cut view of the storage unit for a vehicle console in Figs. 1 and 2;
Fig. 5 is a side view illustrating an operation state of the basket in Fig. 3;
Fig. 6 is a partial cross-sectional view taken alone line "A-A" in Fig. 4;
Figs. 7 and 8 are side views schematically illustrating a guide rail and a guide portion according to another embodiment of the present invention; and
Fig. 9 is a perspective view illustrating a basket according to another embodiment of the present invention.

### DESCRIPTION OF SPECIFIC EMBODIMENTS

Exemplary embodiments of the present invention will be described below in more detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention. The drawings are not necessarily to scale and in some instances, proportions may have been exaggerated in order to clearly illustrate features of the embodiments.

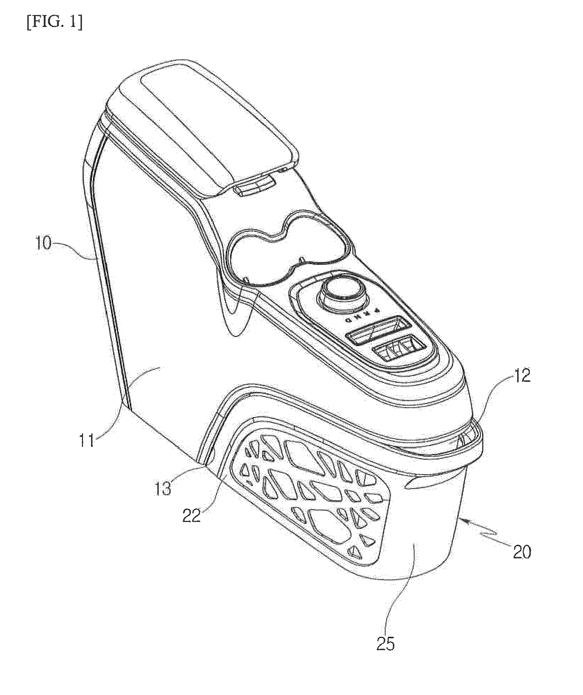

Referring to Figs. 1 to 6, a storage unit for a vehicle console according to an embodiment of the present invention includes a console body 10, a basket 20 slidably provided on an outer surface of the console body 10, and guide rails 31 and guide portions 32 for slidably guiding the basket 20.

The basket 20 has a storage space portion 21 capable of accommodating a tip portion of the console body 10.

The basket 20 includes a pair of side portions 22 seated to side surfaces 11 facing a driver seat and an occupant seat in the outer surface of the console body 10, a front portion 25 seated to a front surface 12 of the console body 10, and a bottom portion 26 formed by the side portions 22 and a lower end of the front portion 25.

As illustrated in Fig. 3, the front portion 25 is provided between the side portions 22 and a console entry port 27 is formed at a side opposite to the front portion 25. Accordingly, the basket 20 has a substantially " 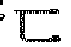 "-shaped cross section as a whole. The storage space portion 21 for accommodating the tip portion of the console body 10 is formed by the front portion 25, the side portions 22, and the bottom portion 26.

As illustrated in Fig. 1, when no article is stored in the basket 20, the tip portion of the console body 10 is inserted into the console entry port 27 and is located in the storage space portion 21. In this case, the front portion 25 and the side portions 22 surround the side surfaces 11 and front surface 12 of the console body 10.

As such, since the basket 20 is provided on the outer surface of the console body 10, an internal space of the console is not occupied and a storage space may be secured.

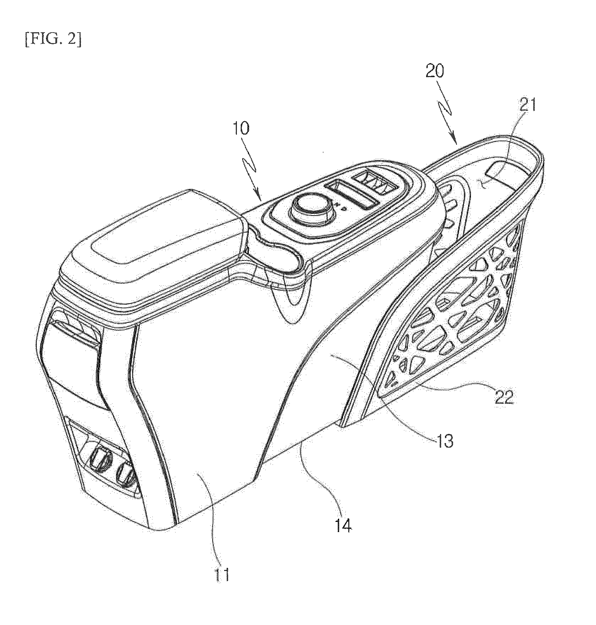

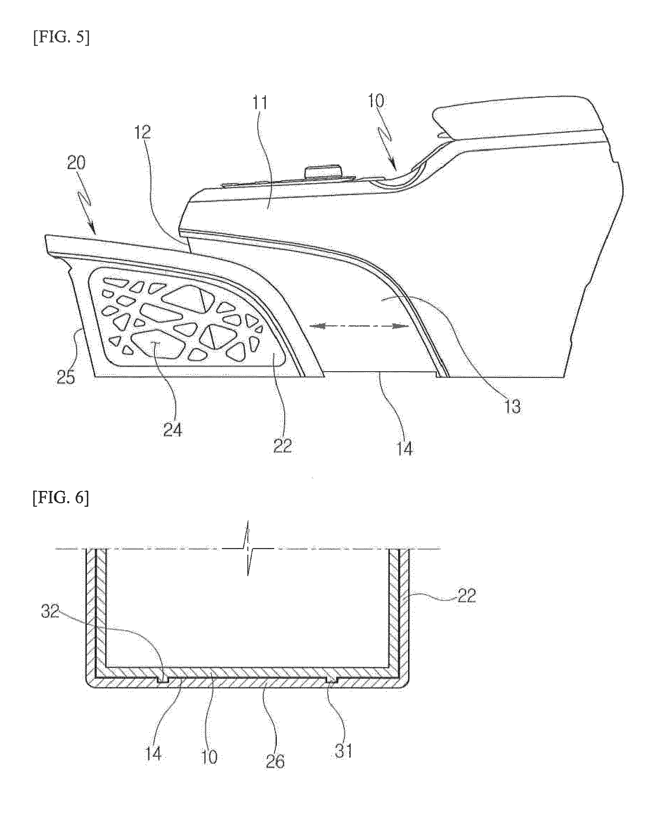

As illustrated in Figs. 2 and 5, the outer surface of the console body 10 is formed with a basket seating groove 13 to which the side portions 22 and front portion 25 of the basket 20 are seated. Thus, when the front portion 25 and the side portions 22 surround the side surfaces 11 and front surface 12 of the console body 10 in a state in which no article is stored in the basket 20, the front 25 and the side portions 22 are inserted and seated to the basket seating groove 13. Therefore, the side portions 22 and front portion 25 of the basket 20 do not further protrude outward than the outer surface of the console body 10. The side portions 22 and front portion 25 of the basket 20 have a thickness equal to or less than a depth of the basket seating groove 13, and are thus accommodated in the basket seating groove 13. Consequently, the basket 20 does not protrude from the outer surface of the console body 10. Thus, a user may move without interruption by the basket 20 even though the basket 20 is provided outside the console body 10.

A handle portion 23 is formed at an upper end of the front portion 25 of the basket 20. The handle portion 23 protrudes outward from the console body 10 so as to be easily gripped by the user.

The tip portion of the console body 10 is formed with a basket entry groove 14 for accessibly accommodating the bottom portion 26 of the basket 20. The basket entry groove 14 is formed on a back surface of the tip portion of the console body 10 so as to be spaced apart from the interior floor of the vehicle. The bottom portion 26 of the basket 20 is accessed to the basket entry groove 14 formed between the console body 10 and the interior floor of the vehicle. As illustrated in Fig. 4, when the basket 20 is not used, the bottom portion 26 is inserted in the basket entry groove 14. As illustrated in Fig. 5, when the basket 20 is drawn and used, the bottom portion 26 is separated from the basket entry groove 14.

As illustrated in Fig. 6, the guide rails 31 are formed on an inner wall of the basket entry groove 14 of the console 10 and the guide portions 32 are formed on the bottom portion 26 of the basket 20.

Each of the guide rails 31 protrudes downward from a side wall of the basket entry groove 14 and each of the guide portions 32 is recessed into the bottom portion 26. The guide rail 31 and the guide portion 32 are linearly formed in forward and backward directions of the console body 10. Accordingly, the guide portion 32 is linearly moved along the guide rail 31 and thus the basket 20 slides relative to the console body 10.

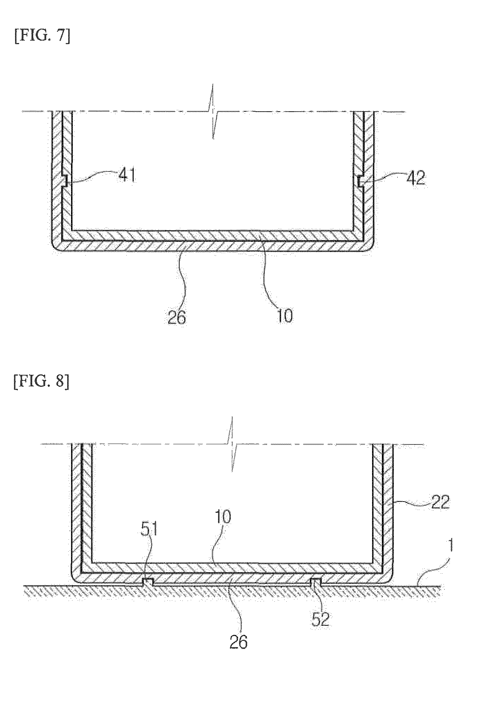

Alternatively, the side surfaces 11 of the console body 10 may be formed with guide rails 41 and the side portions 22 of the basket 20 may be formed with guide portions 42, as illustrated in Fig. 7. Furthermore, the guide rails 41 may be recessed into the side surfaces 11 of the console body 10 and the guide portions 42 may protrude from inner walls of the side portions 22.

Meanwhile, as illustrated in Fig. 8, guide rails 51 may be formed on the interior floor 1 of the vehicle and guide portions 52 may be formed on a back surface of the bottom portion 26 of the basket 20. In this case, the guide portions 52 are supported by the guide rails 51 in a state in which the guide portions 52 are placed on the guide rails 51. Therefore, the bottom portion 26 of the basket 20 may be spaced apart from the interior floor 1 of the vehicle by a predetermined distance. In the embodiment illustrated in Fig. 6, since the basket 20 slides in a state in which the back surface of the bottom portion 26 comes into contact with the interior floor 1 of the vehicle, external force may be significantly required to draw the basket 20 due to friction between the bottom portion 26 and the interior floor 1. On the other hand, in the embodiment illustrated in Fig. 8, since the basket 20 slides in a state in which the bottom portion 26 is spaced apart from the interior floor 1 of the vehicle, the basket 20 may be drawn by relatively small force.

As illustrated in Fig. 5, when the user draws the basket 20 by gripping the handle portion 23, the basket 20 slides so that the storage space portion 21 is exposed to the outside and the storage space is secured as illustrated in Fig. 2.

When the basket 20 is drawn for storage of articles, the articles stored in the storage space portion 21 are located on the bottom portion 26. In this case, when the basket 20 is moved, the articles are moved together.

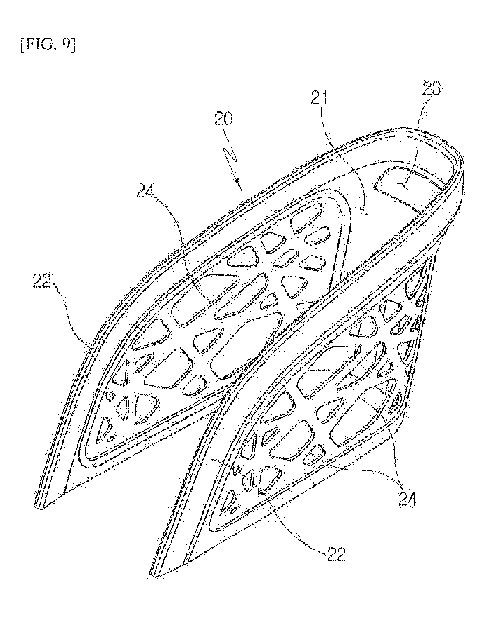

Alternatively, as illustrated in Fig. 9, a basket 20 may be configured of a front portion 25 and a pair of side portions 22 without a bottom portion 26. In this case, articles stored in the storage space portion 21 are located on the interior floor of the vehicle and the side portions 22 only serve to support or restrict the articles such that the articles do not fall down.

The basket 20 may be made of a flexible material having elasticity. Accordingly, the user may easily handle the basket 20, and the basket 20 may have excellent touch feeling and may be slightly deformed according to the size or shape of an article. Therefore, a slightly larger article than the basket 20 may be stored therein while the basket 20 is elastically deformed.

In particular, the flexible material having elasticity serves to prevent noise from occurring due to vibration of the basket 20 by absorbing impacts of the vehicle.

The side portions 22 of the basket 20 are formed with a plurality of pattern holes 24. The pattern holes 24 have various shapes so that the aesthetic external appearance of the storage unit is realized.

As is apparent from the above description, in accordance with a storage unit for a vehicle console according to exemplary embodiments of the present invention, the storage unit is provided on an outer surface of a console such that an internal space of the console is not occupied by the storage unit and a storage space can be secured. In addition, when the storage unit is made of a flexible material, it is possible to store a larger article than a basket.

In addition, since a side portion of the basket is exposed to the outside of the console, various patterns can be formed on the side portion so that a vehicle interior is aesthetically decorated.

While the present invention has been described with respect to the specific embodiments, it will be apparent to those skilled in the art that various changes and modifications may be made without departing from the spirit and scope of the invention as defined in the following claims.

## Claims

1. A storage unit for a vehicle console, comprising:
a console body; and
a basket slidably provided on an outer surface of the console body and having a storage space portion for accommodating a tip portion of the console body.

2. The storage unit according to claim 1, wherein the basket comprises:
a pair of side portions seated to side surfaces facing a driver seat and an occupant seat in the outer surface of the console body; and
a front portion provided between the side portions and seated to a front surface of the console body.

3. The storage unit according to claim 2, wherein the console body has a basket seating groove formed on the outer surface thereof, the side portions and front portion of the basket being seated to the basket seating groove.

4. The storage unit according to claim 2, wherein:
the basket has a bottom portion formed by the side portions and a lower end of the front portion; and
the console body has a basket entry groove for accessibly accommodating the bottom portion of the basket.

5. The storage unit according to claim 2, wherein the basket has a plurality of pattern holes formed on the side portions.

6. The storage unit according to claim 4, further comprising a guide rail and a guide portion, the guide rail slidably guiding the guide portion provided in the basket, the guide portion being provided in the basket to move along the guide rail.

7. The storage unit according to claim 6, wherein:
the guide rail is formed on an inner wall of the basket entry groove of the console body; and
the guide portion is formed on the bottom portion of the basket.

8. The storage unit according to claim 6, wherein:
the guide rail is formed on each of the side surfaces of the console body; and
the guide portion is formed on each of the side portions of the basket.

9. The storage unit according to claim 6, wherein:
the guide rail is formed on an interior floor of the vehicle; and
the guide portion is formed on a back surface of the bottom of the basket.

10. The storage unit according to claim 1, wherein the basket is made of a flexible material having elasticity.
